(19) Europäisches Patentamt
European Patent Office
Office européen des brevets

(11) Publication number: **0 323 126**
**A2**

(12) **EUROPEAN PATENT APPLICATION**

(21) Application number: **88312148.5**

(51) Int. Cl.[4]: **C08G 63/18**

(22) Date of filing: **21.12.88**

(30) Priority: **24.12.87 IT 2322087**

(43) Date of publication of application:
**05.07.89 Bulletin 89/27**

(84) Designated Contracting States:
**BE DE FR GB NL**

(71) Applicant: **Montedison S.p.A.**
**31, Foro Buonaparte**
**I-20121 Milan(IT)**

(72) Inventor: **Casagrande, Francesco**
**10, via C. M. Giulino**
**I-28100 Novara(IT)**
Inventor: **Foa, Marco**
**19, via del Sabbione**
**I-28100 Novara(IT)**
Inventor: **Gardano, Andrea**
**11, corso Roma**
**I-13039 Trino (Vercelli)(IT)**
Inventor: **Chapoy, L. Lawrence**
**60, via Davicini**
**I-28040 Lesa (Novara)(IT)**

(74) Representative: **Whalley, Kevin et al**
**MARKS & CLERK 57/60 Lincoln's Inn Fields**
**London WC2A 3LS(GB)**

(54) **Liquid-crystalline, thermotropic aromatic polyesters.**

(57) Liquid-crystalline, thermotropic, aromatic polyesters processable in the molten state, comprising units derived from aromatic or cycloaliphatic dicarboxylic acids, units derived from hydroquinones substituted with aryl, aralkyl and aroyl groups, and units derived from phenoxy-hydroquinones.

EP 0 323 126 A2

# LIQUID-CRYSTALLINE, THERMOTROPIC AROMATIC POLYESTERS

The present invention relates to liquid-crystalline, thermotropic aromatic polyesters.

More particularly, the present invention relates to liquid-crystalline, thermotropic, aromatic polyesters easily processable in the molten state, and having a mesogen group in their main chain.

Thermotropic polyesters, which hence show an optical anisotropy in the molten state, are products known and described in many examples in the technical literature, such as in British Polymer Journal (Dec. 1980), page 154: "Liquid Crystal Polymer"; Journal of Macromolecular Science-Chemistry (1984), page 1705: "Liquid Crystalline Aromatic Polyesters"; Die Angewandte Makromolekulare Chemie (1982), 109-110, page 1: "Rigid Chain Polymers"; Die Angewandte Makromolekulare Chemie (1986), 145-146 page 231: "Thermotropic Liquid Crystalline Polymers"; Journal of Molecular Science Review (1986), page 551: "Liquid Crystalline Polymers: A Novel State of Material".

The use of such polyesters makes it possible to obtain high-tenacity fibres or moulded articles from the material in the molten state, such as by injection- moulding, which have suitable characteristics of rigidity, hardness and toughness.

The polymers having the above stated properties are generally easily processable in the molten state, hightly resistant to heat and oxidation and furthermore, due to their crystallinity, such polymers display high HDT (Heat Distorsion Temperature) values and are highly resistant to attack by solvents.

Liquid-crystalline, thermotropic polyesters having the above mentioned characteristics, and particularly suitable for preparing fibres or films, are disclosed in U.S. patent no. US-A-4,529, 565. As disclosed in this patent' polyesters optically anisotropic in the molten state are those which contain units respectively derived from phenoxy-hydroquinone, from aromatic diols of general formula:

HO - Ar - OH (I) (1)

and from terephthalic acid, optionally in mixture with p-hydroxybenzoic acid.

By the radical Ar, there are herein meant either an oxy-4,4′-diphenylene radical, or a limited and well-defined group of aromatic radicals, wherein the ring may be a single ring, a double ring, or a condensed ring, optionally substituted with at least one methyl group, or with one chlorine atom.

In said patent, it is stated that the presence of the unit derived from phenoxy-hydroquinone has the effect of reducing the crystallinity of the polymer, and of lowering the melting point thereof, but in order to obtain this result it is necessary that such a unit is contained in an amount higher than 50 % by mol, and preferably within the range of from 80 to 90 % by mol, as referred to the total of the aromatic diols used.

We have now found that liquid-crystalline, thermotropic polyesters easily processable in the molten state can be prepared by using a mixture of aromatic diols with a content of phenoxy-hydroquinone lower than 50 % by mol, if such diols are hydroquinones substituted with alkyl, aralkyl or aroyl groups.

The present invention provides liquid-crystalline, thermotropic, aromatic polyesters comprising:

a) units derived from at least one aromatic or cycloaliphatic dicarboxylic acid;

b) units derived from at least one hydroquinone substituted with an aryl, and/or aralkyl, and/or aroyl group containing from 6 to 20 carbon atoms; and

c) units derived from hydroquinones having the general formula:

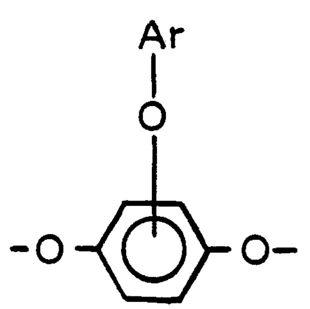

(II)

wherein Ar represents a simple, double or condensed aryl radicals, optionally substituted with one or more inert groups, such as the halogens, or ($C_1$-$C_4$)-alkyl radicals.

According to a preferred embodiment of the polyesters of the present invention, the aromatic or cycloaliphatic dicarboxylic acid is present for at least 90 mol % in the isomeric form having mutually parallel or coaxial carboxy groups.

Examples of dicarboxylic acids are terephthalic acid, chloro- or bromo-terephthalic acid, methyl-terephthalic acid, 1,4-naphthalene-dicarboxylic acid, 1,5-naphthalene-dicarboxylic acid and 2,6-naphthalene-dicarboxylic acid, 4,4′-di-phenyl-dicarboxylic acid, 3,3′-dibromo-4,4′-di-phenyl-dicarboxylic acid, 4,4′-stilbene-dicarboxylic acid, and cyclohexane-dicarboxylic acid.

Any hydroquinones substituted with the above mentioned groups can be used in the preparation of the aromatic polyesters of the present invention, and phenyl-hydroquinone, (1-phenyl-ethyl)-hydroquinone, 2-(α-phenyl-isopropyl)-hydroquinone and benzoyl-hydroquinone are particularly preferred.

Examples of suitable hydroquinones of general formula (II) are phenoxy-hydroquinone, chloro-phenoxy-hydroquinone, methyl-phenoxy-hydroquinone, and tert. butyl-phenoxy-hydroquinone.

Preferably the units derived from the dicarboxylic acid are in an equimolecular ratio to the units derived from such hydroquinones as defined under (b) and (c), while these latter are in molar ratios of (c)/(b) lower than than 1, more preferably within the range of from 0.15 to 0.8.

As already indicated, the units derived from the hydroquinones as defined under (b) can be used either individually, or mixed with one another.

The polymers according to the present invention are optically anisotropic in the molten state, as can be verified by means of optical microscopy analysis under polarized light, and suitably have an inherent viscosity, as measured in a 1:1 mixture of trifluoroacetic acid and methylene chloride at 30 °C, at a concentration of 2.5 g/litre, within the range of from 0.3 to 6 dl/g.

As an alternative, other solvents, such as pentafluorophenol at 60 °C, may be used as well.

The melting temperature can be within a wide range, according to the composition of the polymer and the polymerization degree; generally, such a melting temperature is within the range of from 200 to 350 °C.

The molecular weight and the crystallinity can be increased by heating the polymer particles in an inert medium, or under vacuum, at a temperature just below the melting point, for at time ranging from 1 to 20 hours.

The aromatic polyesters according to the present invention are well suited for being used in order to obtain manufactured articles which can be prepared by means of the usual technologies of fabrication of the thermoplastic polymers, such as injection moulding or extrusion; they can be processed to yield films or fibres, can be used as matrices for composite materials containing inorganic fibres or fillers, and can be used in the preparation of blends with other polymers.

The preparation of the liquid-crystalline polyesters according to the present invention can be carried out by means of conventional techniques, by reacting the above mentioned units, commercially available or easily preparable by conventional techniques, under the normal conditions of preparation of the polyester resins.

For example, said polyesters can be obtained in the molten state, or in the presence of a dispersing vehicle having a high boiling point, such as diphenyl-sulphone, or mixtures of partially hydrogenated terphenyls, by transesterification between the dicarboxylic aromatic acids and the acetates or propanoates of the phenols, at temperatures within the range of from 270 to 370 °C, so as to favour the complete release of the carboxylic acids, also operating under vacuum.

The reaction can be optionally carried out in the presence of a transesterification catalyst such as alkali metal or alkaline-earth metal phosphates.

Further catalysts can be those which are commonly used in the polycondensation processes, and are described in "Encyclopaedia of Polymer Science and Technology" (1969, Vol. 10, pages 722-723). Examples of such catalysts are the oxides, hydroxides, hydrides, halides, alkoxides or phenates, the salts and the complex salts of the organic or inorganic acids of lithium, sodium, potassium, magnesium, calcium, titanium, manganese, cobalt, zinc, tin, antimony, lanthanum, cerium, lead and germanium.

The required catalyst amount is preferably within the range of from 0.005 to 1% by mol, more preferably from 0.01 to 0.2% by mol, relative to the total amount of the reactants.

According to an alternative method, the liquid-crystalline polyesters of the present invention can be obtained in solution, by polycondensation between the halides of the dicarboxylic aromatic acids and the mixture of the phenols in a suitable solvent. The temperature is within the range of from 25 to 220 °C, and the reaction is carried out in the presence of a base and/or of a stream of nitrogen in order to favour the elimination of the hydrogen halide.

Among the bases, pyridine is preferred, whilst among the solvents, the chlorinated solvents are preferred, both aliphatic and aromatic, such as methylene chloride, chloro-benzene, dichloro-benzenes and trichloro-benzenes.

The thus-obtained polymer is subsequently recovered by evaporating the solvent, or by precipitation with a non-solvent, and subsequent filtration.

The invention will be further described with reference to the following illustrative Examples.

## Example 1

Into a 4-neck glass flask of 100 cc of capacity, equipped with mechanical stirring means, condenser, and nitrogen inlet tube, 2.77 g (13.6 mM) of terephthalic acid dichloride, 1.46 g (6.8 mM) of (1-phenylethyl)-hydroquinone. 0.63 g (3.4 mM) of

phenyl-hydroquinone, 0.68 g (3.4 mM) of phenoxy-hydroquinone and 60 cc of 1,2,4-trichloro-benzene were charged under a slow nitrogen stream.

The reaction mixture was kept for 30 minutes at room temperature with stirring and under a nitrogen stream, and then heating was started, and the temperature was increased up to 220°C by using a silicone-oil bath.

The reaction mixture was maintained at this temperature for 10 hours, until the evolution of HCl ended. At the end of the polymerization, the reaction mixture had the appearance of a jelly-like solution of light colour.

Still under a nitrogen stream, and with stirring, the oil bath was removed, and the reaction mixture was allowed to cool; when it reached 50°C, the reaction mixture was poured into acetone and the precipitate was filtered off.

The thus-obtained polymer was washed with acetone (twice), hot water (twice) and acetone/methanol (twice).

The end product was dried under vacuum for 4 hours at 170-180°C. There were obtained 4.34 g of the product, with a yield of 95% of the theoretical value.

The dried polymer had a melting temperature (Tm) of about 332°C, and an inherent viscosity of 3.0 dl/g (as measured at 30°C in a solvent composed of equal volumes of trifluoroacetic acid and methylene chloride, at a concentration of 2.5 g/litre).

The molten polymer was optically anisotropic when observed by a microscope under polarized light.

The melting temperature was determined by means of D.S.C. (Differential Scanning Calorimetry) at a scanning speed of 20°C/minute.

## Example 2

Into the same apparatus as used in Example 1, and under the same conditions, 2 .03 g (10 mM) of terephthaltic acid dichloride, 1.30 g (7mM) of phenyl-hydroquinone, 0.60 g (3 mM) of phenoxy-hydroquinone and 40 cc of 1,2,4-trichlorobenzene were charged.

The reaction was then carried out as disclosed in Example 1, with the reaction being maintained at 220°C for 11 hours.

There were obtained 2.89 g (yield of 90% of theoretical) of dry polymer, which had a melting temperature (Tm) of about 325°C, and an inherent viscosity of 5.5 dl/g (measured at 60°C in pentafluorophenol at a concentration of 2.5 g/litre).

The molten polymer was optically anisotropic when observed by a microscope under polarized light.

## Example 3

Into the same apparatus as used in Example 1, and under the same conditions, 2.03 g (10 mM) of terephthalic acid dichloride, 1.07 g (5 mM) of benzoyl-hydroquinone, 0.47 g (2.5 mM) of phenyl-hydroquinone, 0.51 g (2.5 mM) of phenoxy-hydroquinone and 40 cc of 1,2,4-trichlorobenzene were charged.

The reaction was then carried out as disclosed in Example 1, with the reaction mixture being maintained at 220°C for 11 hours.

There were obtained 3.06 g of dry polymer (yield of 95% of theoretical), which had a melting temperature (Tm) of about 320°C, and an inherent viscosity of 1.8 dl/g (measured as described in Example 2).

The molten polymer was optically anisotropic when observed by a microscope under polarized light.

## Example 4

Into the same apparatus as used in Example 1, and under the same conditions, 2.03 g (10 mM) of terephthalic acid dichloride, 1.47 g (6 mM) of (α-phenyl-isopropyl)-hydroquinone, 0.81 g (4 mM) of phenoxy-hydroquinone and 45 cc of 1,2,4-trichlorobenzene were charged.

The reaction was then carried out as disclosed in Example 1, with the reaction mixture being maintained at 220°C for 12 hours.

There were obtained 3.22 g of dry polymer (yield of 93% of theoretical), which had a melting temperature (Tm) of about 284°C, and an inherent viscosity of 1.95 dl/g (measured as described in Example 1).

The molten polymer was optically anisotropic when observed by a microscope under polarized light.

## Claims

1. A liquid-crystalline, thermotropic, aromatic polyester comprising:

a) units derived from at least one aromatic or cycloaliphatic dicarboxylic acid;

b) units derived from at least one hydroquinone substituted with an aryl, and/or aralkyl, and/or aroyl group containing from 6 to 20 carbon atoms; and

c) units derived from at least one hydroquinone having the general formula:

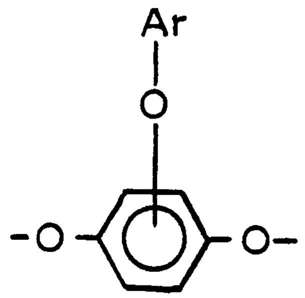

(II)

wherein Ar represents a single, double or condensed aryl radical, optionally substituted with one or more inert groups, such as a halogen or a ($C_1$-$C_4$)-alkyl radical.

2. A polyester as claimed in claim 1, characterized in that the dicarboxylic acid is present for at least 90 mol % in the isomeric form having the carboxy groups mutually parallel or coaxial.

3. A polyester as claimed in claim 1 or 2, characterized in that the dicarboxylic acid is selected from terephthalic acid, chloro- or bromoterephthalic acid, methyl-terephthalic acid, 1,4-naphthalene-dicarboxylic acid. 1,5-naphthalene-dicarboxylic acid, 2,6-naphthalene-dicarboxylic acid, 4,4′-diphenyl-dicarboxylic acid, 3,3′-dibromo-4,4′-diphenyl-dicarboxylic acid, 4,4′-stilbene-dicarboxylic acid, and cyclohexane-dicarboxylic acid.

4. A polyester as claimed in any of claims 1 to 3, characterized in that the substituted hydroquinone is selected from phenyl-hydroquinone, (1-phenyl-ethyl)-hydroquinone, 2-(α-phenyl-isopropyl)-hydroquinone, and benzoyl-hydroquinone.

5. A polyester as claimed in any of claims 1 to 4, characterized in that the hydroquinone of general formula (II) is selected from phenoxy-hydroquinone, chloro-phenoxy-hydroquinone, methyl-phenoxy-hydroquinone, and tert.-butyl-phenoxy-hydroquinone.

6. A polyester as claimed in any of claims 1 to 5, characterized in that the units derived from the dicarboxylic acid are in an equimolecular ratio to the units derived from the hydroquinones (b) and (c), and in that the latter are in a molar ratio of (c)/(b) lower than 1, preferably within the range of from 0.15 to 0.8.

7. A polyester as claimed in any of claims 1 to 6, characterized by having an inherent viscosity, measured in a 1:1 mixture of trifluoroacetic acid and methylene chloride at 30°C, or in pentafluorophenol at 60°C, at a concentration of 2.5 g/litre, within the range of from 0.3 to 6 dl/g, and a melting temperature within the range of from 200 to 350°C.

8. Use of the polyesters according to any of claims 1 to 7, in order to obtain fibres, films, articles formed by injection or extrusion, or as matrices for composite materials based on inorganic fibres or fillers, or in mixture with other polymers.